# EUROPÄISCHE PATENTANMELDUNG

(11) **EP 2 000 717 A2**
(43) Veröffentlichungstag der Anmeldung: **10.12.2008**
(21) Anmeldenummer: 08104099.0
(22) Anmeldetag: 27.05.2008
(51) Int. Cl.: F16K 27/12

(54) **Armaturenabdeckung**

(30) Priorität: 04.06.2007 CH 8832007
(71) Anmelder: vonRoll infratec (investment) ag, 6300 Zug (CH)
(72) Erfinder: Pichler, Bruno, 6330, Cham (CH); Portmann, Hansjörg, 4563, Gerlafingen (CH)
(74) Vertreter: OK pat AG

(57) **Zusammenfassung**

Betrifft eine Armaturenabdeckung (1) mit einem Deckel (2), der zumindest teilweise in den Rahmen (3) einer Betätigungseinrichtung (4) von an Netzen bzw. an Einzelleitungen zur Leitung von Wasser, Gas oder anderen Fluiden angeschlossenen, erdverlegten Armaturen einsetzbar ist. Die erfindungsgemässe Armaturenabdeckung (1) ist dadurch gekennzeichnet, dass sie einen Trennring (5) umfasst, welcher aus einem Material besteht, das sich von dem Material des Rahmens (3) der Betätigungseinrichtung (4) und/oder dem Material des Deckels (2) zumindest in seiner Witterungsbeständigkeit unterscheidet und welcher zwischen dem Rahmen (2) der Betätigungseinrichtung (4) und dem Deckel (2) platzierbar ist.

## Beschreibung

Die vorliegende Erfindung betrifft allgemein eine Armaturenabdeckung mit einem Deckel, der zumindest teilweise in den Rahmen einer Betätigungseinrichtung von an Netzen bzw. an Einzelleitungen zur Leitung von Wasser, Gas oder anderen Fluiden angeschlossenen, erdverlegten Armaturen einsetzbar ist.

Hydranten sind schon seit langer Zeit und in sehr vielen unterschiedlichen Ausführungen bekannt. Sie dienen in erster Linie als Armaturen zur Wasserentnahme aus einem öffentlichen Versorgungsnetz und beliefern beispielsweise die Feuerwehr mit Löschwasser. Es sind hauptsächlich zwei verschiedene Ausführungen bekannt, nämlich der Unterflurhydrant und der Überflurhydrant. Beide können aus einem 1- oder 2-teiligen Mantelrohr, bzw. Ventilgehäuse bestehen, welches beispielsweise mit seinem unteren Ende an eine Versorgungsleitung angeschlossen werden kann. Innenseitig weisen Hydranten mindestens eine Absperrung auf, die als Ventil ausgebildet ist. Zum Betätigen, bzw. Öffnen und Schliessen dieses Ventils oder Abschlusses kann eine von aussen betätigbare, drehbare Spindel dienen, welche als Teil einer Innengarnitur zumeist im Wesentlichen axial im Hydranten verläuft. Unterflurhydranten sind zumeist in den Boden versenkt und mit einer Abdeckung versehen, die zumindest teilweise in einen Rahmen eingelegt ist, welcher - zusammen mit der Abdeckung - den obersten Abschluss des Unterflurhydranten bildet. Weitere Armaturen mit ähnlichen Abdeckungen sind beispielsweise Schieber oder Entnahmeventile, die zum Absperren von Wasserleitungen oder auch von Gasleitungen bzw. zur kontrollierten Entnahme von derartigen oder anderen Fluiden aus Verteilungsnetzen oder Einzelleitungen dienen.

Allen diesen Armaturen ist gemeinsam, dass die Abdeckung bzw. der Deckel, welcher die Betätigungseinrichtung der jeweiligen Armatur abdeckt und vor Umwelteinflüssen bzw. unerlaubter Betätigung schützt, sich mehr oder weniger auf dem Niveau der unmittelbaren Umgebung befindet. Diese Umgebung kann eine Wiese oder eine andere natürliche Bodenoberfläche sein. Meistens weist jedoch diese Umgebung bzw. das Terrain eine mehr oder weniger harte Unterlage auf, so dass diese von Personen begangen und/oder mit Fahrzeugen befahren werden kann. Die Abdeckung liegt dann vorzugsweise auf demselben Niveau wie die Umgebung und wird deshalb allgemein als "Strassenkappe" bezeichnet.

Seit vielen Jahren werden die Gehäuse von Hydranten, Schiebern und Entnahmeventilen aus Gusseisen hergestellt. Auch die Deckel dieser Gehäuse, die Strassenkappen, bestehen zumeist aus Gusseisen. Diese Deckel sind standardmässig zumindest teilweise so in den Rahmen eingelegt, dass sie nicht verrutschen können. Der langjährige Einsatz solcher Deckel stellt normalerweise den Regelfall dar. Es ist beobachtet worden, dass im Laufe der Zeit und auch durch Umwelteinflüsse (wie Regen, Salzwasser, Frost, Belastung durch Fahrzeuge und dergleichen) der Rahmen mit dem Deckel eine dauerhafte Verbindung eingehen kann. Diese Verbindung kann bis zum Verschweissen führen, so dass Rahmen und Deckel nur sehr schwer oder gar nicht mehr voneinander getrennt werden können. Somit kann es erforderlich sein, dass der Rahmen mit dem den Deckel tragenden Gehäuseteil ausgebaut und ersetzt werden muss. Umfangreiche Arbeiten und ein teilweises Absperren der entsprechenden Terrainstücke sind dabei notwendig. Speziell aufwändig und unangenehm ist es, wenn diese Terrainstücke Teile von Fahrbahnen bei Strassen, Autobahnen, Tunnels, Brücken oder Flugplätzen sind.

Es ist die Aufgabe der vorliegenden Erfindung, eine alternative Armaturenabdeckung der eingangs genannten Art vorzuschlagen, welche den aus dem Stand der Technik bekannten Nachteil beseitigt.

Diese Aufgabe wird mit einer Armaturenabdeckung gemäss den Merkmalen von Anspruch 1 erfüllt, indem eine Armaturenabdeckung mit einem Deckel vorgeschlagen wird, der zumindest teilweise in den Rahmen einer Betätigungseinrichtung von an Netzen bzw. an Einzelleitungen zur Leitung von Wasser, Gas oder anderen Fluiden angeschlossenen, erdverlegten Armaturen einsetzbar ist. Die erfindungsgemässe Armaturenabdeckung ist dadurch gekennzeichnet, dass die Armaturenabdeckung einen Trennring umfasst, welcher aus einem Material besteht, das sich von dem Material des Rahmens der Betätigungseinrichtung und/oder dem Material des Deckels zumindest in seiner Witterungsbeständigkeit unterscheidet und welcher zwischen dem Rahmen der Betätigungseinrichtung und dem Deckel platzierbar ist. Weitere bevorzugte und erfinderische Merkmale ergeben sich aus den abhängigen Ansprüchen.

Die Erfindung wird nun an Hand von schematischen und den Umfang der Erfindung nicht einschränkenden Zeichnungen und an Hand von beispielhaften Ausführungsformen näher erläutert. Dabei zeigt:
- Fig. 1: einen vertikalen Teilschnitt durch den Rahmen einer Betätigungseinrichtung einer erdverlegten Armatur mit einem eingesetzten Trennring, wobei im Kreis (links) eine erste Ausführungsform und im Rechteck (rechts) eine zweite Ausführungsform des erfindungsgemässen Trennrings dargestellt ist;
- Fig. 2: vergrösserte Ausschnitte aus Fig. 1 (vgl. Kreis), wobei
Fig. 2A einen Querschnitt durch einen Trennring mit aussenseitiger Reliefstruktur und entsprechender Vertiefung im Rahmen der Betätigungseinrichtung; und
Fig. 2B einen Querschnitt durch einen Trennring mit innenseitiger Reliefstruktur und entsprechender Vertiefung im Deckel der Armaturenabdeckung zeigt;
- Fig. 3: einen vergrösserten Ausschnitt aus Fig. 1 (vgl. Rechteck) mit einem Querschnitt durch einen Trennring mit innenseitiger Reliefstruktur, entsprechender Vertiefung im Deckel der Armaturenabdeckung und einer Verdickung mit Schulter gemäss einer zweiten Ausführungsform der Erfindung.

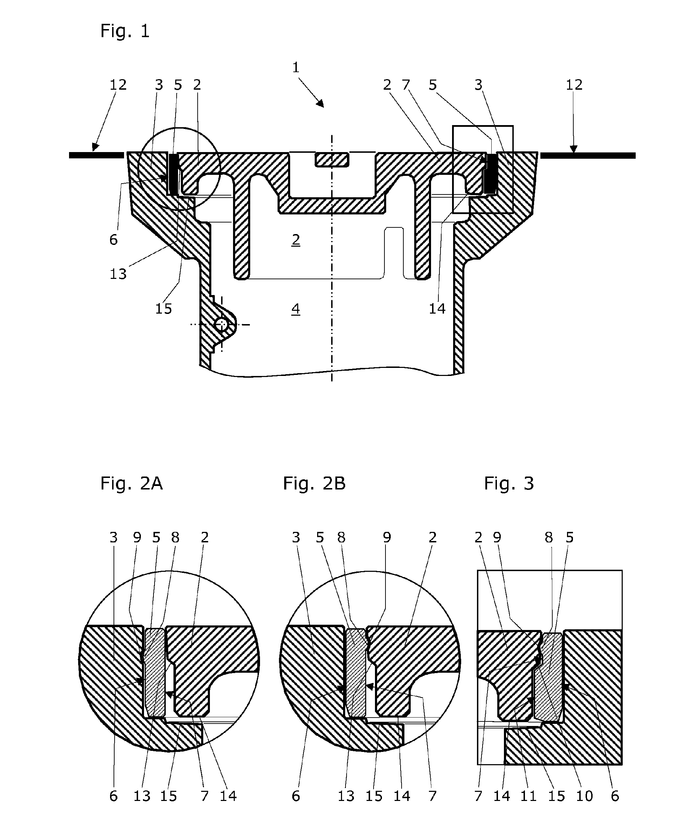

Figur 1 zeigt einen vertikalen Teilschnitt durch den Rahmen einer Betätigungseinrichtung einer erdverlegten Armatur mit einem eingesetzten Trennring gemäss der Erfindung. Mit "erdverlegt" werden alle Verlegearten der hier wesentlichen Armaturen bezeichnet, welche sich unterhalb des durchschnittlichen Niveaus der unmittelbaren Umgebung bzw. des umgebenden Terrains befinden. Dies gilt auch dann, wenn sich die Armaturen im Boden eines Gebäudes, eines Tunnels, einer Brücke oder sonst eines Bauwerks befinden.

Die erfindungsgemässe Armaturenabdeckung 1 umfasst einen Deckel 2, der zumindest teilweise in den Rahmen 3 einer Betätigungseinrichtung 4 einsetzbar ist. Diese Betätigungseinrichtung 4 gehört zu einer erdverlegten Armatur (nicht gezeigt), welche an ein Netz oder an eine Einzelleitungen zur Verteilung bzw. zur Leitung von Wasser, Gas oder anderen Fluiden angeschlossenen ist (nicht gezeigt). Die Armaturenabdeckung 1 umfasst zudem einen Trennring 5, welcher aus einem Material besteht, das sich von dem Material des Rahmens 3 der Betätigungseinrichtung 4 und/oder dem Material des Deckels 2 zumindest in seiner Witterungsbeständigkeit unterscheidet und welcher zwischen dem Rahmen 2 der Betätigungseinrichtung 4 und dem Deckel 2 platzierbar ist. Zudem wird bevorzugt, dass sich das Material des Trennrings 5 auch in Bezug auf die mechanischen Eigenschaften vom Material des Deckels 2 und/oder des Rahmens 3 unterscheidet.

Der erfindungsgemässe Trennring 5 schafft somit eine witterungsbeständige, vorzugsweise zudem eine festigkeitsmässige Materialtrennung zwischen dem Rahmen 3 und dem Deckel 2, so dass keine oder nur eine möglichst kleine direkte Berührung dieser beiden Bauteile möglich ist. Dadurch wird erreicht, dass der Rahmen 3 und der Deckel 2 miteinander keine dauerhafte Verbindung, wie z.B. eine Verschweissung eingehen können. Diese Trennung ist dann besonders bevorzugt, wenn Rahmen und Deckel aus dem identischen Material (wie z.B. Gusseisen) bestehen, weil dann die Gefahr des Korrosion und damit auch des Verschweissens besonders hoch ist.

Gemäss einer ersten Ausführungsform besteht der erfindungsgemässe Trennring 5 aus einem Kunststoff oder einem diesen Kunststoff umfassenden Verbundwerkstoff. Dieser Kunststoff ist vorzugsweise Polyoxymethylen oder Polyacetal (POM) und weist gegenüber Gusseisen erhöhte Gleiteigenschaften auf. Auch andere hochbelastbare Materialien, die wie der Thermoplast POM bevorzugte Eigenschaften wie:
- einen niedrigen Reibwiderstand,
- eine gute Abriebfestigkeit,
- ein hervorragendes Federvermögen,
- eine hohe Ermüdungsfestigkeit bei wechselnder Beanspruchung,
- eine hohe Durchschlagfestigkeit,
- eine gute Chemikalienfestigkeit,
- eine gute Beständigkeit gegen Spannrissbildung
aufweisen, sind für den Einsatz als Trennringe geeignet.

Verbundwerkstoffe die einen geeigneten Thermoplast und dessen physikalische Werte noch verbessernde Füllstoffe umfassen sind ebenfalls bevorzugt. Solche Füllstoffe umfassen beispielsweise die Zugbelastungsfähigkeit erhöhende Fasern oder Drähte aus Kohlenstoff, Glas oder Stahl. Solche Füllstoffe umfassen auch die Druckfestigkeit erhöhende Partikel, wie Glimmer, Schichtsilikate und andere mineralische Füllstoffe.

Diese erste Ausführungsform des Trennrings 5 ist in Figur 1 im Kreis (links) dargestellt. Die Figur 2 zeigt diese kreisförmigen Ausschnitte aus Fig. 1 vergrössert.

In Figur 2A ist eine erste Variante dieser ersten Ausführungsform dargestellt. Der Querschnitt zeigt einen Trennring 5, der zwischen dem Deckel 2 und dem Rahmen 3 der Betätigungseinrichtung 4 eingelegt ist. Der Trennring 5 ist vorzugsweise ein in sich geschlossener Ring und weist eine im Wesentlichen glatte Innenseite 7 auf. Auf seiner Aussenseite 6 ist der Trennring 5 mit einer Reliefstruktur 8 ausgestattet. Diese Reliefstruktur ist hier als umlaufender Wulst ausgebildet. Diese Reliefstruktur kann aber auch aus Wulststücken oder Noppen bestehen, welche auf dem Umfang des Trennrings 5 zumindest im Wesentlichen regelmässig verteilt sind. In den der Reliefstruktur 8 des Trennrings 5 gegenüber liegenden, im Wesentlichen senkrechten Teil des Rahmens 3 ist eine vorzugsweise ebenfalls umlaufende Rinne 9 eingearbeitet.

Einerseits ist das Überarbeiten von bereits produzierten oder sogar schon erdverlegten Rahmen 3 von Betätigungseinrichtungen 4 wesentlich einfacher zu bewerkstelligen, wenn die Rinne 9 umlaufend ausgebildet ist. Diese Rinne kann dann z.B. einfach eingeschliffen werden. Andererseits spielt die Ausrichtung der als Noppen oder Wulststücke ausgebildeten Reliefstruktur 8 des Trennrings 5 keine Rolle, diese Reliefstrukturen 8 können in jeder Kreisposition in die Rinne 9 des Rahmens 3 einschnappen.

In Figur 2B ist eine zweite Variante dieser ersten Ausführungsform dargestellt. Der Querschnitt zeigt einen Trennring 5, der zwischen dem Deckel 2 und dem Rahmen 3 der Betätigungseinrichtung 4 eingelegt ist. Der Trennring 5 ist vorzugsweise ein in sich geschlossener Ring und weist eine im Wesentlichen glatte Aussenseite 6 auf. Auf seiner Innenseite 7 ist der Trennring 5 mit einer Reliefstruktur 8 ausgestattet. Diese Reliefstruktur ist hier als umlaufender Wulst ausgebildet. Diese Reliefstruktur kann aber auch aus Wulststücken oder Noppen bestehen, welche auf dem Umfang des Trennrings 5 zumindest im Wesentlichen regelmässig verteilt sind. In den der Reliefstruktur 8 des Trennrings 5 gegenüber liegenden, im Wesentlichen senkrechten Teil des Deckels 2 ist eine vorzugsweise ebenfalls umlaufende Rinne 9 eingearbeitet.

Einerseits ist das Überarbeiten von bereits produzierten Deckeln 2 wesentlich einfacher zu bewerkstelligen, wenn die Rinne 9 umlaufend ausgebildet ist. Diese Rinne kann dann z.B. einfach eingeschliffen werden. Andererseits spielt die Ausrichtung der als Noppen oder Wulststücke ausgebildeten Reliefstruktur 8 des Trennrings 5 keine Rolle, diese Reliefstrukturen 8 können in jeder Kreisposition in die Rinne 9 des Deckels 2 einschnappen.

Eine dritte Variante dieser ersten Ausführungsform des erfindungsgemässen Trennrings ist nicht dargestellt und stellt eine Kombination der beiden gezeigten ersten und zweiten Varianten dar. Der Trennring ist vorzugsweise ein in sich geschlossener Ring. Auf seiner Aussenseite 6 und seiner Innenseite 7 ist der Trennring 5 mit je einer Reliefstruktur 8 ausgestattet. Diese Reliefstrukturen können als umlaufender Wulst ausgebildet sein. Bevorzugt bestehen diese Reliefstrukturen aber aus Wulststücken oder Noppen, welche auf dem Umfang des Trennrings 5 zumindest im Wesentlichen regelmässig verteilt sind. Besonders bevorzugt wird, dass sich diese Wulststücke oder Noppen abwechselnd auf der Innenseite und auf der Aussenseite befinden, so dass sich auf der jeweils anderen Seite des Trennrings und gerade gegenüber eines Wuststücks oder Noppens keine Reliefstruktur befindet. Durch die Distanz dieser alternierend auf der Aussenseite 6 und Innenseite 7 angeordneten Reliefstrukturen 8, durch die Dicke des Trennrings 5 und die Elastizität des für den Trennring verwendeten Materials wird die Federwirkung bestimmt, mit welcher die Reliefstrukturen 8 in die vorzugsweise im Deckel 2 und im Rahmen 3 umlaufenden Rinnen 9 einschnappen.

Gemäss einer der soeben besprochenen drei Varianten des Trennrings 5 umfasst dieser auf seiner Aussenseite 6 und/oder Innenseite 7 zumindest eine Reliefstruktur 8 umfasst, mit welcher er mit dem Rahmen 3 der Betätigungseinrichtung 4 und/oder mit dem Deckel 2 verbindbar ist. Bevorzugt ist der Trennring 5 zumindest vom Rahmen 3 der Betätigungseinrichtung 4 mit einem Werkzeug trennbar, ohne dass der Rahmen 3 ausgebaut werden muss. Diese Trennbarkeit wird durch einen nicht als geschlossenen Ring hergestellten Trennring 5 erleichtert. Dieser kann im Extrusionsverfahren hergestellt werden und wird dann bevorzugt in der endgültigen Ring-Form erkalten lassen. Vorzugsweise wird der Trennring 5 jedoch als geschlossener Ring im Spritzgussverfahren aus Kunststoff oder einem Verbundwerkstoff hergestellt.

Eine zweite Ausführungsform des Trennrings 5 ist in Figur 1 im Rechteck (rechts) dargestellt. Die Figur 3 zeigt diesen rechteckförmigen Ausschnitt aus Fig. 1 vergrössert.

In Figur 3 ist ein Querschnitt dieser zweiten Ausführungsform dargestellt. Der Querschnitt zeigt einen Trennring 5, der zwischen dem Deckel 2 und dem Rahmen 3 der Betätigungseinrichtung 4 eingelegt ist. Der Trennring 5 ist auch hier vorzugsweise ein in sich geschlossener Ring und weist eine im Wesentlichen glatte Aussenseite 6 auf. Auf seiner Innenseite 7 ist der Trennring 5 mit einer Reliefstruktur 8 ausgestattet. Diese Reliefstruktur ist hier als umlaufender Wulst ausgebildet. Diese Reliefstruktur kann aber auch aus Wulststücken oder Noppen bestehen, welche auf dem Umfang des Trennrings 5 zumindest im Wesentlichen regelmässig verteilt sind. In den der Reliefstruktur 8 des Trennrings 5 gegenüber liegenden, im Wesentlichen senkrechten Teil des Deckels 2 ist eine vorzugsweise ebenfalls umlaufende Rinne 9 eingearbeitet.

Gemäss dieser zweiten Ausführungsform besteht der erfindungsgemässe Trennring 5 aus Stahl und weist gegenüber Gusseisen erhöhte Gleiteigenschaften auf. Alle oben für POM aufgelisteten Materialeigenschaften treffen auch für diesen Trennring 5 aus Stahl zu. Der Reibwiderstand und die Chemikalienfestigkeit des Stahlrings können zusätzlich dadurch verbessert werden, dass eine umhüllende Beschichtung aus einem artfremden Material aufgebracht wird, welche gegenüber Gusseisen erhöhten Gleiteigenschaften aufweist. Solche Beschichtungen können z.B. Titannitrid oder Molybdändisulfid umfassen.

Im Unterschied zum Kunststoffring weist der Trennring 5 aus Stahl auf seiner Innenseite 7 vorzugsweise eine Verdickung 11 mit einer Schulter 10 auf. Diese Verdickung 11 verstärkt einerseits den Trennring 5 und stellt als Übergang zum oberen Teil des Trennrings, welcher in seiner Dicke zumindest annähernd der Dicke des Kunststoffrings entspricht, eine Schulter 10 bereit. Auf dieser Schulter 10 ruht der Deckel 2 mit seinem Rücksprung 13 (vgl. auch Fig. 1, 2A und 2B). Der Deckel 2 kann damit mit seinem Rand 14 nicht mehr auf dem Absatz 15 des Rahmens 3 der Betätigungseinrichtung 4 aufliegen. Somit ist der Deckel 2 komplett von dem Rahmen 3 getrennt. Bevorzugt wird der Trennring 5 aus Stahl mit Schulter 10 und Verdickung 11 als ein geschlossener Ring hergestellt.

Eine dritte Ausführungsform der vorliegenden Erfindung betrifft einen als Beschichtung des Deckels 2 und/oder des Rahmens 3 ausgebildeten Trennring 5 und ist zeichnerisch nicht weiter dargestellt. Diese Beschichtung umfasst ein Kunststoffmaterial und wird vorzugsweise auf die gegenseitigen Berührungsflächen des Deckels 2 und/oder des Rahmens 3 aufgetragen. Diese Berührungsflächen werden vor dem Auftragen der Kunststoffbeschichtung vorzugsweise sandgestrahlt und gründlich von Fettrückständen befreit, bzw. gereinigt. Der für die Beschichtung bevorzugt verwendete Kunststoff ist von hoher Festigkeit und chemischer Beständigkeit; besonders bevorzugt sind dabei Polyurethan (PUR) oder ein Epoxydharz (EP). Das Beschichtungsmaterial wird vorzugsweise mit einem Pinsel auf eine oder beide gegenseitigen Berührungsflächen des Deckels 2 und/oder des Rahmens 3 aufgetragen oder auf eine dieser Flächen und bevorzugt ringförmig aufgespritzt. Die bevorzugte Schichtdicke beträgt ca. 1 mm. Alternativ zu einer lediglich ringförmigen Beschichtung kann auch die ganze Deckelunterseite zusammen mit den senkrechten Partien des Deckels beschichtet werden.

Der Vorteil dieser dritten Ausführungsform des Trennrings 5 liegt darin, dass keine Rinne 9 bzw. kein Hinterstich in den Deckel 2 oder den Rahmen 3 eingearbeitet werden muss. Soll nur der Deckel 2 beschichtet werden, so kann ein unbeschichteter Deckel einfach gegen einen beschichteten Deckel ausgetauscht werden.

Der erfindungsgemässe Trennring 5 schafft somit auch als Beschichtung auf zumindest einer der gegenseitigen Berührungsflächen von Deckel 2 oder Rahmen 3 einer Betätigungseinrichtung 4 von an Netzen bzw. an Einzelleitungen zur Leitung von Wasser, Gas oder anderen Fluiden angeschlossenen, erdverlegten Armaturen eine zumindest witterungsbeständige und bevorzugt vollständige Materialtrennung zwischen dem Rahmen 3 und dem Deckel 2.

Gleiche Teile sind mit den gleichen Bezugszeichen versehen, auch wenn diese nicht in allen Fällen ausdrücklich beschrieben sind.

Weitere Kombinationen der gezeigten oder beschriebenen Elemente gehören zum Umfang der vorliegenden Erfindung.

### Bezugszeichen:

- 1: Armaturenabdeckung
- 2: Deckel
- 3: Rahmen
- 4: Betätigungseinrichtung
- 5: Trennring
- 6: Aussenseite
- 7: Innenseite
- 8: Reliefstruktur
- 9: Rinne
- 10: Schulter
- 11: Verdickung
- 12: Terrain
- 13: Rücksprung
- 14: Rand
- 15: Absatz

## Patentansprüche

1. Armaturenabdeckung (1) mit einem Deckel (2), der zumindest teilweise in den Rahmen (3) einer Betätigungseinrichtung (4) von an Netzen bzw. an Einzelleitungen zur Leitung von Wasser, Gas oder anderen Fluiden angeschlossenen, erdverlegten Armaturen einsetzbar ist, **dadurch gekennzeichnet, dass** die Armaturenabdeckung (1) einen Trennring (5) umfasst, welcher aus einem Material besteht, das sich von dem Material des Rahmens (3) der Betätigungseinrichtung (4) und/oder dem Material des Deckels (2) zumindest in seiner Witterungsbeständigkeit unterscheidet und welcher zwischen dem Rahmen (2) der Betätigungseinrichtung (4) und dem Deckel (2) platzierbar ist.

2. Armaturenabdeckung (1) nach Anspruch 1, **dadurch gekennzeichnet, dass** der Trennring (5) aus einem Kunststoff oder einem Verbundwerkstoff, vorzugsweise als ein geschlossener Ring, gefertigt ist.

3. Armaturenabdeckung (1) nach Anspruch 2, **dadurch gekennzeichnet, dass** der Kunststoff oder Verbundwerkstoff Polyacetal (POM) umfasst und gegenüber Gusseisen erhöhte Gleiteigenschaften aufweist.

4. Armaturenabdeckung (1) nach Anspruch 2, **dadurch gekennzeichnet, dass** der Trennring (5) als Beschichtung zumindest des Deckels (2) oder des Rahmens (3) ausgebildet ist, wobei die Beschichtung vorzugsweise aus Polyurethan (PUR) besteht und auf die gegenseitigen Berührungsflächen des Deckels 2 und/oder des Rahmens 3 aufgetragen ist.

5. Armaturenabdeckung (1) nach Anspruch 1, **dadurch gekennzeichnet, dass** der Trennring (5) aus Stahl gefertigt ist und vorzugsweise eine umhüllende Beschichtung aus einem artfremden Material mit gegenüber Gusseisen erhöhten Gleiteigenschaften aufweist.

6. Armaturenabdeckung (1) nach Anspruch 5, **dadurch gekennzeichnet, dass** der Trennring (5) aus Stahl vorzugsweise als ein geschlossener Ring gefertigt ist und auf seiner Innenseite (7) eine Verdickung (11) mit einer Schulter (10) aufweist, auf welcher der Deckel (2) mit einem Rücksprung (13) aufliegt.

7. Armaturenabdeckung (1) nach einem der Ansprüche 1 bis 3 oder 5 bis 6, **dadurch gekennzeichnet, dass** der Trennring (5) auf seiner Aussenseite (6) und/oder Innenseite (7) zumindest eine Reliefstruktur (8) umfasst, mit welcher der Trennring (5) mit dem Rahmen (3) der Betätigungseinrichtung (4) und/oder mit dem Deckel (2) verbindbar ist.

8. Armaturenabdeckung (1) nach Anspruch 7, **dadurch gekennzeichnet, dass** die Reliefstruktur (8) des Trennrings (5) auf seiner Aussenseite (6) oder Innenseite (7) als umlaufender Wulst ausgebildet ist, welcher in eine entsprechend geformte Rinne (9) im Rahmen (3) der Betätigungseinrichtung (4) oder im Deckel (2) einschnappbar ausgebildet ist.

9. Armaturenabdeckung (1) nach Anspruch 7 oder 8, **dadurch gekennzeichnet, dass** der Trennring (5) vom Rahmen (3) der Betätigungseinrichtung (4) mit einem Werkzeug trennbar ist, ohne dass der Rahmen (3) ausgebaut werden muss.

10. Verwendung einer Armaturenabdeckung (1) gemäss einem der vorhergehenden Ansprüche, **dadurch gekennzeichnet, dass** der Deckel (2) der Armaturenabdeckung (1) mit einem Trennring (5) zumindest teilweise gegenüber dem Rahmen (3) der Betätigungseinrichtung (4) getrennt wird.

11. Verwendung nach Anspruch 10, **dadurch gekennzeichnet, dass** der Trennring (5) aus einem Kunststoff oder einem Verbundwerkstoff gefertigt ist und vorzugsweise POM umfasst.
